# EUROPÄISCHE PATENTSCHRIFT

(11) **EP 1 303 371 B1**
(45) Veröffentlichungstag und Bekanntmachung des Hinweises auf die Patenterteilung: **02.11.2005**
(21) Anmeldenummer: 01984218.6
(22) Anmeldetag: 05.07.2001
(51) Int. Cl.: B22D 13/06, B22D 13/10

(54) **SCHLEUDERGUSSVORRICHTUNG**
CENTRIFUGAL CASTING DEVICE
DISPOSITIF DE COULEE PAR CENTRIFUGATION

(30) Priorität: 15.07.2000 DE 10034641
(43) Veröffentlichungstag der Anmeldung: 23.04.2003
(73) Patentinhaber: Cser, Sandor, 97350 Mainbernheim (DE)
(72) Erfinder: Cser, Sandor, 97350 Mainbernheim (DE)
(74) Vertreter: Böck, Bernhard
(86) Internationale Anmeldenummer: PCT/DE2001/002421
(87) Internationale Veröffentlichungsnummer: WO 2002/005988

(56) Entgegenhaltungen:
- DE-C- 77 768
- DE-C- 715 260
- FR-A- 852 514
- FR-A- 1 346 299
- GB-A- 362 035
- US-A- 5 980 792
- PATENT ABSTRACTS OF JAPAN vol. 1996, no. 07, 31. Juli 1996 (1996-07-31) & JP 08 057619 A (HONDA MOTOR CO LTD), 5. März 1996 (1996-03-05)

## Beschreibung

Die Erfindung betrifft eine Schleudergussvorrichtung nach dem Oberbegriff des unabhängigen Hauptanspruchs.

Die Formfüllung des Formnestes in einer Hohlgussform beruht bei Schleudergussverfahren darauf, dass die Hohlgussform in eine Rotationsbewegung um eine Rotationsachse herum versetzt wird. Aufgrund dieser Rotationsbewegung wirkt auf den flüssig geschmolzenen Gusswerkstoff beim Eingießen eine entsprechende Zentrifugalkraft, die den Gusswerkstoff in das Formnest drückt und für eine vollständige Ausfüllung sorgt.

Je nach Dichte und Wärmekapazität des Gusswerkstoffes sind unterschiedlich hohe Rotationsgeschwindigkeiten für eine vollständige Füllung des Formnestes erforderlich. Dies beruht zum einen darauf, dass auf Werkstoffe mit relativ geringer Dichte, beispielsweise Titan, nur eine entsprechend relativ schwache Fliehkraft wirkt, so dass zur Aufbringung einer ausreichend hohen Füllkraft eine entsprechend höhere Drehzahl gewählt werden muss. Außerdem erstarren Werkstoffe geringer Wärmekapazität, beispielsweise Titan, relativ schnell, so dass eine vollständige Füllung des Formnestes, die eine ausreichende Fließfähigkeit des Gusswerkstoffes voraussetzt, in sehr kurzer Zeit bewirkt werden muss. Für derartig kurze Füllzeiten ist wiederum eine hohe Rotationsgeschwindigkeit erforderlich.

Bei handelsüblichen Schleudergussvorrichtungen für den Feinguss, wie sie beispielsweise in der Zahntechnik oder bei der Schmuckherstellung Verwendung finden, ist nur eine Hohlgussform vorhanden, die um eine außerhalb der Hohlgussform liegende Rotationsachse in einem bestimmten Abstand rotiert. Daraus folgt, dass auf die Hohlgussform selbst erhebliche Fliehkräfte wirken. Um die Hohlgussform auf ihrer Rotationsbahn zu halten, sind deshalb bei bekannten Schleudergussvorrichtungen massive mechanische Aufbauten erforderlich, um die Fliehkräfte abzufangen und die Unwucht, die von der rotierenden Masse der Hohlgussform und der Masse des Gusswerkstoffes herrührt, zu kompensieren. Aus dem massiven mechanischen Aufbau bekannter Schleudergussvorrichtungen folgt ein hohes Gewicht mit entsprechend hohen Trägheitsmomenten, aus denen lange Beschleunigungs- bzw. Abbremsphasen folgen.

Aus der DE 195 05 689 A1 ist eine Schleudergussvorrichtung mit einer wiederverwendbaren Hohlgussform bekannt, bei der jeweils gleichartige Formnester paarweise derart angeordnet sind, dass sie um eine gemeinsame Rotationsachse rotieren und durch einen gemeinsamen Eingusskanal befüllt werden können. Sollen mit diesen bekannten Vorrichtungen mehr als zwei Werkstücke gleichzeitig gegossen werden, so werden die jeweils paarweise angeordneten Formnester in mehreren Schichten übereinander angeordnet, so dass sie in mehreren Ebenen zu liegen kommen.

Nachteilig an dieser Vorrichtung ist es, dass jeweils nur eine gradzahlige Anzahl von gleichartigen Werkstücken in einem Schleudergussvorgang hergestellt werden kann. Außerdem variiert abhängig von der Anzahl der zusammen in der Hohlgussform vorgesehenen Formnester die Gesamthöhe der Hohlgussform, so dass abhängig von der Anzahl der jeweils zusammen in einem Gießvorgang herzustellenden Werkstücke unterschiedliche Bauteile zum Aufbau der Schleudergussvorrichtung erforderlich sind.

Aus der GB 362 035 ist eine Schleudergussvorrichtung mit einer Dauerform bekannt, bei dem mehrere symmetrisch zu einer Rotationsachse vorgesehene Formnester vorhanden sind, die um eine gemeinsame Rotationsachse rotieren.

Aus der FR 1 346 299 ist eine Schleudergussvorrichtung mit einer verlorenen Hohlgussform bekannt. Der Mittelteil der Hohlgussform wird von oben über einen mittig angeordneten, sich vertikal erstreckenden Angusskanal mit Gusswerkstoff befüllt, der in eine am oberen Ende des Angusskanals vorgesehene Eingussmulde eingegossen wird.

Ausgehend von diesem Stand der Technik ist es Aufgabe der vorliegenden Erfindung, eine neue Schleudergussvorrichtung vorzuschlagen.

Diese Aufgabe wird durch die Vorrichtung gemäß Anspruch 1 gelöst.

Die Erfindung beruht auf dem Grundgedanken, dass bei der Durchführung des Schleudergussverfahrens zur Erhöhung der in einem Gießvorgang herstellbaren Werkstücke drei oder mehr Formnester um eine Achse rotieren und dabei so angeordnet sind, dass sie von einer gemeinsamen Ebene geschnitten werden. Unter dieser Anordnung der verschiedenen Formnester ist also jede Ausbildung zu verstehen, bei der die verschiedenen Formnester derart angeordnet sind, dass sie sich zumindest teilweise in einer gemeinsamen Rotationsebene erstrecken. Teile der Formnester im Sinne dieser Erfindung sind auch die Angusskanäle, die die Kavität zur Begrenzung des eigentlich herzustellenden Gusswerkstückes mit einer Eingussmulde, in die der flüssige Gusswerkstoff eingegossen wird; verbinden. Im Ergebnis ist es also selbstverständlich nicht erforderlich, dass alle Formnester ausschließlich in der gemeinsamen Schnittebene angeordnet sind. Vielmehr werden sich in der Regel die verschiedenen Formnester je nach Form und Größe jeweils abschnittsweise über die gemeinsame Ebene hinaus erstrecken. Zur Erfüllung des erfindungsgemäßen Prinzips ist es vorgesehen, dass die Ausflussöffnungen, mit denen die Angusskanäle der einzelnen Formnester in die Eingussmulde münden, von der gemeinsamen Schnittebene geschnitten werden.

Durch die Anordnung der Formnester in einer gemeinsamen Ebene lässt sich ein einfacher Massenausgleich zwischen den Formnestern bzw. Hohlgussformen erreichen, da sich die von den Formnestern bzw. Hohlgussformen verursachten Unwuchten im Wesentlichen gegenseitig kompensieren und somit die von der Schleudergussvorrichtung abzufangenden Zentrifugalkräfte minimiert werden können.

Um einen möglichst gleichmäßigen Massenausgleich zwischen den einzelnen Formnestern zu erreichen, ist es besonders vorteilhaft, wenn bei der Anordnung von n Formnestern diese möglichst gleichmäßig um einen Drehwinkel von etwa 360°/n versetzt angeordnet sind. D. h., die verschiedenen Formnester liegen jeweils mit einem Zwischenwinkel von 360°/n zueinander versetzt auf kreisförmigen Umlaufbahnen, so dass sich insgesamt eine nur geringe Unwucht ergibt.

An einer erfindungsgemäßen Schleudergussvorrichtung ist eine Haltevorrichtung zur Befestigung einer Hohlgussform vorgesehen. In diese Hohlgussform ist dabei jedoch nicht nur ein Formnest, sondern sind zumindest drei Formnester eingearbeitet. Die Haltevorrichtung der Schleudergussvorrichtung muss dabei derart ausgebildet sein, dass die Hohlgussform in einer Art befestigbar ist, dass die Formnester bei Antrieb der Schleudergussvorrichtung in einer Ebene um die gemeinsame Rotationsachse rotieren. Mit anderen Worten bedeutet dies, dass die Hohlgussform bei dieser Schleudergussvorrichtung um eine Rotationsachse rotieren kann, die sich beispielsweise durch den Schwerpunkt der Hohlgussform erstreckt. Aufgrund dieser Anordnung kann ein weitgehender Massenausgleich bei der Rotationsbewegung der Hohlgussform insgesamt erreicht werden, da im Wesentlichen jedem Massepunkt der Hohlgussform ein entsprechendes Gegengewicht auf der gegenüberliegenden Seite gegenübersteht. Unwuchten können dabei lediglich durch die unregelmäßige Form und Anordnung der verschiedenen Formnester hervorgerufen werden. Bei ausreichend gleichmäßiger Verteilung der nach Möglichkeit möglichst gleich großen Formnester kann die Unwucht jedoch auf eiwtolerierbares Maß reduziert werden. Die einzelnen Formnester in der Hohlform sind dabei vorzugsweise im Wesentlichen rotationssymmetrisch um die Hauptträgheitsachse der Hohlgussform angeordnet.

Die Angnsskanäle können sich dabei vorzugsweise ausgehend von den in der Schnittebene Ebene liegenden Ausflussöffnungen abwechselnd schräg nach oben und unten radial nach außen erstrecken. Dadurch können die Kavitäten, die später das eigentliche Gusswerkstück bilden, in der Hohlgussform dichter gepackt werden, da diese Kavitäten dann in zumindest zwei übereinander liegenden Ebenen zu liegen kommen und durch die schräg verlaufenden Angusskanäle mit den in der Schnittebene liegenden Ausflussöffnungen verbunden sind.

Wie bereits dargelegt, erfordern unterschiedliche Gusswerkstoffe unterschiedliche Fliehkräfte bzw. Gusszeiten. Nach einer bevorzugten Ausführungsform kann deshalb an der erfindungsgemäßen Schleudergussvorrichtung die Drehzahl abhängig von der verwendeten Hohlgussform und/oder des zu vergießenden Werkstoffes eingestellt werden. Dadurch können beispielsweise Werkstoffe mit hoher Wärmekapazität bzw. hoher Dichte, insbesondere Gold, mit relativ geringer Drehzahl und Werkstoffe mit geringer Dichte und geringer Wärmekapazität mit relativ hohen Drehzahlen gegossen werden.

Die Eingussmulde ist erfindungsgemäß rotationssymmetrisch ausgebildet, um im Ergebnis selbst keinen Einfluss auf die resultierende Unwucht der Hohlgussform zu haben.

Um ein Austreten des flüssigen, in die Eingussmulde eingefüllten Guss-werkstoffes im Wesentlichen auszuschließen, Verjüngt, sich die Eingussmulde erfindungsgemäß nach oben hin. Durch den dabei entstehenden überhängenden oberen Rand der Eingussmulde, wird ein Austreten des flüssigen Gusswerkstoffes zuverlässig vermieden. Konstruktiv kann dies beispielsweise dadurch erreicht werden, dass die Eingussmulde zumindest abschnittsweise konisch ausgebildet ist.

Zur Bildung der Hohlgussformen können kreisringförmige Muffelringe verwendet werden. Bei der Herstellung der Hohlgussform wird dann zunächst ein Modell, beispielsweise aus Wachs, hergestellt, das die Positivform der gewünschten Formnester aufweist. Dieses Modell wird zusammen mit einem Eingussmuldenformer in der Mitte des Muffelringes angeordnet und in eine Formmasse eingebettet. Nach Aushärtung der Formmasse wird der Modellwerkstoff dann thermisch, chemisch oder in sonstig geeigneter Weise ausgetrieben, so dass die Hohlgussform im Ergebnis vom kreisringförmigen Muffelring und dem darin ausgehärteten Formwerkstoff gebildet wird. Alternativ zur Verwendung eines Muffelrings können die erfindungsgemäßen Hohlgussformen, beispielsweise bei Verwendung entsprechend geeigneter Gießvorrichtungen, auch ringlos hergestellt werden.

Wird zur Herstellung der Hohlgussform ein kreisringförmiger Muffelring verwendet, muss das im Muffelring vorhandene Volumen im Wesentlichen vollständig ausgefüllt werden, um den gewünschten Massenausgleich beim rotatorischen Antrieb der Hohlgussform zu erreichen. Ist aufgrund des geringen Volumens der einzelnen Formnester bzw. der geringen Anzahl von Formnestern insgesamt jedoch nur ein relativ geringes Einbettvolumen erforderlich, kann die Verschwendung von unnötig viel Einbettmasse dadurch vermieden werden, dass im Muffelring Einlegeelemente angeordnet werden. Durch diese Einlegeelemente wird das im Muffelring zur Verfügung stehende Volumen reduziert, so dass im Ergebnis weniger Einbettmasse zur Füllung des Restvolumens erforderlich ist. Bei der Anordnung der Einlegeelemente im Muffelring ist selbstverständlich darauf zu achten, dass die Einlegeelemente derart platziert sind, dass sich insgesamt wiederum ein ausreichender Massenausgleich ergibt und durch die Einlegeelemente verursachte Unwuchten im Wesentlichen vermieden werden.

Grundsätzlich kann die erfindungsgemäße Schleudergussvorrichtung für beliebige Gusswerkstücke eingesetzt werden. Besondere Vorteile bietet die Anwendung jedoch bei der Herstellung von Werkstücken im Feinguss, insbesondere bei der Herstellung von Schmuckstücken, Zahnersatz oder Werkzeugteilen.

Grundsätzlich kann die erfindungsgemäße Schleudergussvorrichtung für beliebige Gusswerkstoffe, beispielsweise Gold oder Stahl, eingesetzt werden. Besondere Vorteile bietet die Anwendung des erfindungsgemäßen Verfahrens bzw. der dafür geeigneten Schleudergussvorrichtung bzw. Hohlgussform bei Gusswerkstoffen mit geringer Dichte, beispielsweise Titan, da diese Werkstoffe mit herkömmlichen Verfahren bzw. Vorrichtungen aufgrund der dabei erforderlichen hohen Rotationsgeschwindigkeiten nur mit unbefriedigender Qualität bzw. mit sehr aufwändigen Vorrichtungen vergossen werden können.

Nachfolgend werden Ausführungsformen der Erfindung anhand der Zeichnungen näher erläutert.

Es zeigen:
- **Fig. 1**: eine erste Ausführungsform einer Hohlgussform in schematisch dargestellter Ansicht von oben;
- **Fig. 2**: die Hohlgussform gemäß **Fig. 1** im Querschnitt entlang der Schnittlinie I-I;
- **Fig. 3**: eine zweite Ausführungsform einer Hohlgussform in schematisch dargestellter Ansicht von oben;
- **Fig. 4**: die Hohlgussform gemäß **Fig. 3** im Querschnitt entlang der Schnittlinie II-II;
- **Fig. 5**: eine Schleudergussvorrichtung zur Verwendung mit Hohlgussformen gemäß **Fig. 1** bis **Fig. 4**.

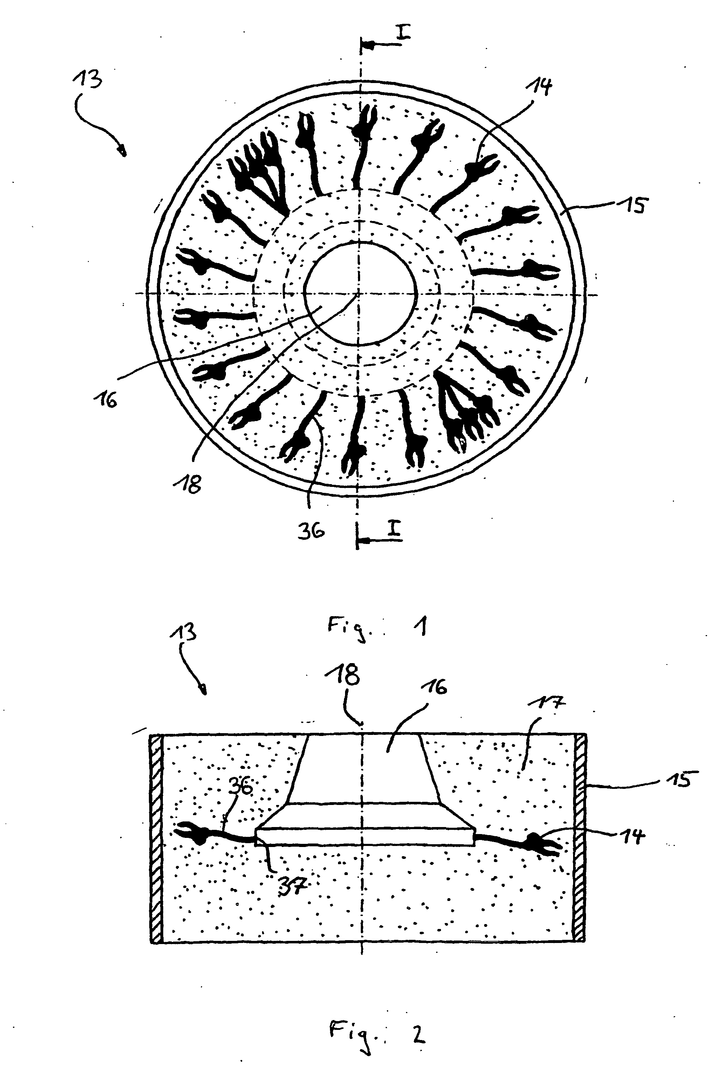

**Fig. 1** stellt eine Hohlgussform 13 in Ansicht von oben dar, wobei zum besseren Verständnis die an sich von außen nicht erkennbaren Formnester 14 mit den jeweils daran anschließenden Angusskanälen 36 angedeutet sind. Die Hohlgussform 13 weist an ihrem Außenumfang einen kreisringförmigen Muffelring 15, beispielsweise aus Stahl, auf. Bei der Herstellung der Hohlgussform 13 wird ein Modell, beispielsweise aus Wachs, verwendet, dessen Form der Positivform der gewünschten Formnester 14 mit Angusskanälen und einer abschnittsweise konischen Eingussmulde 16 entspricht. Zur Herstellung dieses Modells werden die herzustellenden Gussobjekte, z.B. Ersatzzähne, in Wachs modelliert und dann unter Verwendung standardisierter Angusskanalformer an einen standardisierten Angussmuldenformer angeschmolzen. Das so entstandene, im Wesentlichen rotationssymmetrisch ausgebildete Modell wird dann in der Mitte des Muffelringes 15 angeordnet und anschließend in eine härtbare Formmasse 17 eingebettet. Nach Aushärtung der Formmasse 17 wird der Modellwerkstoff ausgeschmolzen, so dass die gewünschte Negativform der Formnester im Formwerkstoff 17 entsteht.

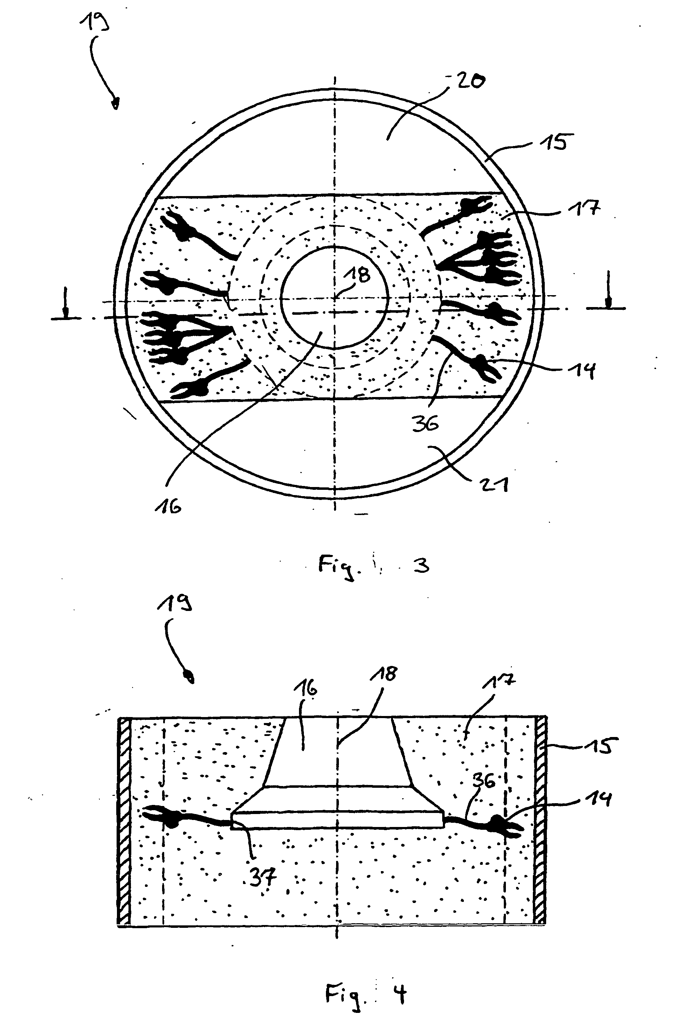

Wie insbesondere aus **Fig. 2** erkennbar, sind die einzelnen Formnester 14 und die Eingussmulde 16 rotationssymmetrisch zur Rotationsachse 18 der Hohlgussform 13 angeordnet. Außerdem liegen alle Formnester 14 in einer gemeinsamen Ebene um die Hauptträgheitsachse 18. Jedes Formnest weist einen Angusskanal 36 mit einer Ausflussöffnung 37 auf, so dass der flüssige Gusswerkstoff aus der Eingussmulde 16 in die Formnester 14 einströmen kann. Im Ergebnis kann die Hohlgussform 13 in einer Schleudergussvorrichtung so angeordnet werden, dass die Hauptträgheitsachse 18 entlang der Rotationsachse der Schleudergussvorrichtung verläuft, so dass die beim rotatorischen Antrieb der Hohlgussform 13 auftretenden Unwuchten im Wesentlichen kompensiert und auf ein zulässiges Maß reduziert sind. Beim eigentlichen Gießvorgang wird der flüssige Gusswerkstoff in die Eingussmulde 16 eingegossen, während sich die Hohlgussform 13 mit einer ausreichend hohen Drehzahl um die Hauptträgheitsachse 18 dreht. Aufgrund der dabei auf den Gusswerkstoff wirkenden Fliehkräfte werden die Formnester 14 schnell und im Wesentlichen lunkerfrei ausgegossen.

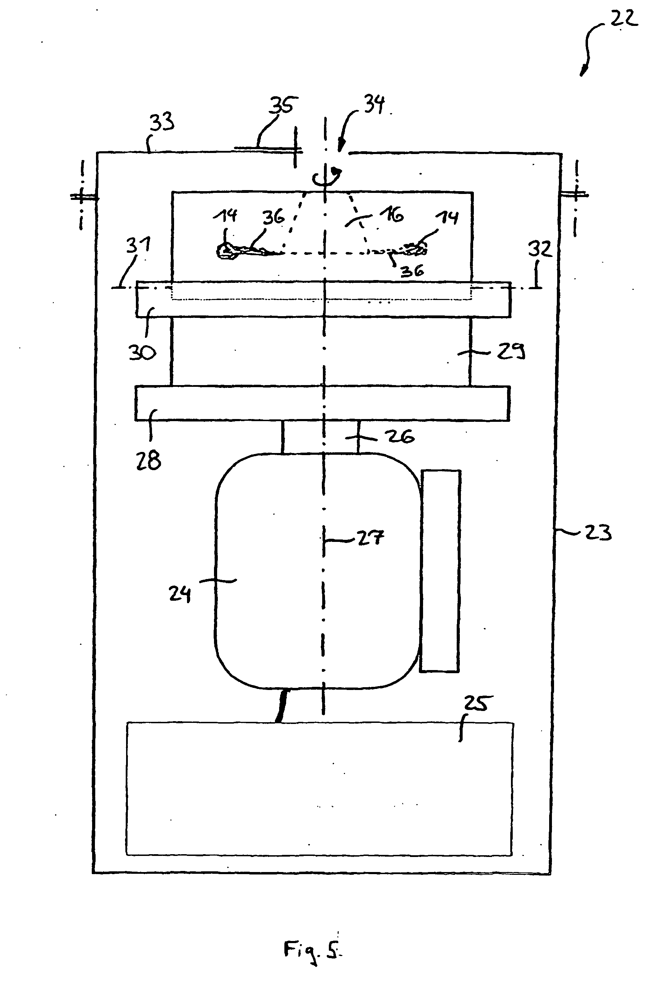

Die in **Fig. 3** dargestellte Ausführungsform 19 einer Hohlgussform entspricht in ihrem wesentlichen Aufbau der Hohlgussform 13. Wiederum findet der kreisringförmige Muffelring 15 Verwendung und ist in den härtbaren Formwerkstoff 17 eine Eingussmulde 16 mit daran anschließenden Angusskanälen und Formnestern 14 vorgesehen.

Um auch die Herstellung einer relativ geringen Anzahl von Werkstücken, d. h. im vorliegenden Fall von Ersatzzähnen, in der Hohlgussform 19 zu ermöglichen, können in dem Muffelring 15 zwei kreisabschnittsförmige Einlegeelemente 20 bzw. 21 einander achssymmetrisch gegenüberliegend angeordnet werden. Durch die Einlegeelemente 20 und 21 wird das von der Formmasse 17 zu füllende Volumen innerhalb des Muffelringes 15 reduziert, wobei sich die Trägheitsmassen der Einlegeelemente 20 und 21 bei einer rotatorischen Bewegung der Hohlgussform 19 um die Hauptträgheitsachse 18 gegenseitig kompensieren.

Die Einlegeelemente 20 und 21 können als massive Bauteile oder als Hohlkörper, z.B. in der Art von Blechbiegeteilen, ausgebildet sein, wobei sich bei der Verwendung von Blechbiegeteilen eine entsprechende Verringerung der trägen Masse insgesamt ergibt.

**Fig. 5** stellt eine zweite Ausführungsform 22 einer Schleudergussvorrichtung in einem schematischen Querschnitt dar. Diese ist zur Verwendung zusammen mit Hohlgussformen 13 und 19, wie sie in **Fig. 1** bis **Fig. 4** dargestellt sind, geeignet. Die Schleudergussvorrichtung 22 weist in einem Gehäuse 23 eine Antriebseinrichtung 24, beispielsweise einen Elektromotor, auf, die mit einer Steuer- und Regeleinrichtung 25 entsprechend den vom Bediener vorgegebenen Einstellungen gesteuert bzw. geregelt wird. Die Antriebswelle 26 kann mittels der Antriebseinheit 24 um eine Mittelachse 27 drehend rotatorisch angetrieben werden. Am oberen Ende der Antriebsachse 26 ist eine Grundplatte 28 vorgesehen, auf deren Oberseite unter Zwischenanordnung eines Distanzstücks 29 eine kreisscheibenförmige Haltevorrichtung 30 befestigbar ist. Die Oberseite der Haltevorrichtung 30 weist eine kreisscheibenförmige Vertiefung auf, deren Durchmesser mit dem Außendurchmesser der Hohlgussform 13 übereinstimmt. Mittels lediglich schematisch dargestellter Spanneinrichtungen 31 und 32, die beispielsweise in der Art von Spannschrauben ausgebildet sein können, wird die Hohlgussform 13 auf der Haltevorrichtung 30 befestigt.

Nach Befestigung der Hohlgussform 13 auf der Grundplatte 30 wird am Gehäuse 23 von oben ein Deckel 33 angebracht, so dass die Hohlgussform 13 nach außen hin umschlossen ist. Oberhalb der Eingussmulde 16 weist der Deckel 33 eine Ausnehmung 34 auf, durch die das geschmolzene Gussmaterial von oben in die Eingussmulde 16 eingegossen werden kann. Ein drehbar gelagerter Deckel 35 dient der Abdeckung der Ausnehmung 34 nach dem Eingießen des flüssigen Gusswerkstoffs.

Aufgrund der Größe und der Form der Eingussmulde 16 sind spezielle Gusstechniken, wie beispielsweise Balkenguss oder verlorene Köpfe, als Reservoir zur Versorgung des Erstarrungsschwunds nicht mehr erforderlich. Diese Funktion wird von der in Eingussmulde verbleibenden Schmelze erfüllt, da das Gussmaterial in diesem Bereich zuletzt erstarrt und dadurch in die Formnester 14 nachgefördert werden kann.

## Patentansprüche

1. Schleudergussvorrichtung (22) zur Herstellung von gegossenen Werkstücken, insbesondere Schmuckstücken, Zahnersatzwerkstücken oder Halbzeugen von Zahnersatz mit zumindest einer Haltevorrichtung zur Befestigung einer zumindest drei Formnester (14) beinhaltenden verlorenen Hohlgussform (13), wobei die Hohlgussform (13) in der Haltevorrichtung derart anordenbar ist, dass die Formnester (14) bei Antrieb der Schleudergussvorrichtung (22) um eine Achse (27) rotieren,
**dadurch gekennzeichnet,**
**dass** die Formnester (14) jeweils zumindest einen Angusskanal (36) mit jeweils einer Ausflussöffnung (37) zu einer Eingussmulde (16) aufweisen, wobei der flüssige Gusswerkstoff in die Eingussmulde (16) einfüllbar ist, so dass die Formnester (14) durch die Angusskanäle (36) mit Gusswerkstoff gefüllt werden können, wobei die Ausflussöffnungen (37) der Formnester (14) in einer Ebene liegen,
und wobei die Eingussmulde (16) rotationssymmetrisch, sich von unten nach oben verjüngend, insbesondere zumindest abschnittsweise konisch, ausgebildet ist, und wobei sich die Mittelachse der Eingussmulde (16) im Wesentlichen entlang der Rotationsachse (18) der Hohlgussform erstreckt.

2. Schleudergussvorrichtung nach Anspruch 1,
**dadurch gekennzeichnet,**
**dass** die Drehzahl abhängig von der verwendeten Hohlgussform (07, 08, 09, 13, 19) und/oder des zu vergießenden Werkstoffes einstellbar ist.

3. Schleudergussvorrichtung nach Anspruch 2,
**dadurch gekennzeichnet,**
**dass** die Drehzahl automatisch einstellbar ist.

4. Schleudergussvorrichtung nach einem der Ansprüche 1 bis 3,
**dadurch gekennzeichnet,**
**dass** die verwendete Anzahl von n Formnestern (14) im Wesentlichen gleichmäßig um einen Drehwinkel von etwa 360°/n versetzt angeordnet ist.

5. Schleudergussvorrichtung nach einem der Ansprüche 1 bis 4,
**dadurch gekennzeichnet,**
**dass** sich die Angusskanäle (36) ausgehend von den in einer Ebene liegenden Ausflussöffnungen (37) abwechselnd schräg nach oben und unten radial nach außen erstrecken.

6. Schleudergussvorrichtung nach einem der Ansprüche 1 bis 5,
**dadurch gekennzeichnet,**
**dass** der äußere Durchmesser der Hohlgussform (13, 19) von einem kreisringförmigen Muffelring (15) gebildet wird.

7. Schleudergussvorrichtung nach Anspruch 6,
**dadurch gekennzeichnet,**
**dass** im Muffelring (15) Einlegeelemente (20, 21) anordenbar sind, die am Innenumfang des Muffelrings (15) formschlüssig zur Anlage gelangen, um das für die Herstellung der Hohlgussform (19) im Muffelring (15) zur Verfügung stehende Volumen zu reduzieren.

8. Schleudergussvorrichtung nach einem der Ansprüche 1 bis 7,
**dadurch gekennzeichnet,**
**dass** zur Herstellung der Eingussmulde (16) ein Eingussmuldenformer verwendet wird, der kreissymmetrisch und/oder zumindest abschnittsweise konisch ausgebildet ist.

9. Schleudergussvorrichtung nach Anspruch 8,
**dadurch gekennzeichnet,**
**dass** der Eingussmuldenformer aus einem austreibbaren Werkstoff hergestellt ist.

## Claims

1. A centrifugal casting apparatus (22) for the manufacture of cast workpieces, in particular pieces of jewellery, denture workpieces or semi-finished denture products, with at least one holding device to attach a dead hollow mould (13) containing at least three mould cavities (14), wherein the hollow mould (13) can be arranged in the holding device such that the mould cavities (14) rotate about an axis (27) when the centrifugal casting apparatus (22) is driven
**characterized in that**
the mould cavities (14) each have at least one sprue runner (36) each with a discharge gate (37) to a runner bush (16), wherein the liquid casting material can be poured into the runner bush (16) so that the mould cavities (14) can be filled with casting material through the sprue runners (36), the discharge gates (37) of the mould cavities (14) lying in a single plane, and wherein the runner bush (16) is constructed rotationally symmetrical, tapering upwards from below, and especially is constructed conically at least in sections, and wherein the central axis of the runner hush (16) extends substantially along the axis of rotation (18) of the hollow mould.

2. The centrifugal casting apparatus according to claim 1,
**characterized in that**
the rotational speed can be adjusted depending on the hollow mould (07, 08, 09, 13, 19) used and/or on the material to be cast.

3. The centrifugal casting apparatus according to claim 2,
**characterized in that**
the rotational speed is automatically adjustable.

4. The centrifugal casting apparatus according to one of claims 1 to 3,
**characterized in that**
the number of n mould cavities (14) used is arranged offset substantially uniformly by an angle of rotation of approximately 360°/n.

5. The centrifugal casting apparatus according to one of claims 1 to 4,
**characterized in that**
the sprue runners (36) extend from the discharge gates (37) lying in a single plane alternately obliquely upwards and radially downwards towards the outside.

6. The centrifugal casting apparatus according to one of claims 1 to 5,
**characterized in that**
the external diameter of the hollow mould (13, 19) is formed by a circular ring-shaped muffle ring (15).

7. The centrifugal casting apparatus according to claim 6,
**characterized in that**
insertion elements (20, 21) which abut positively on the inner circumference of the muffle ring (15) can be arranged in the muffle ring (15) in order to reduce the volume available for the production of the hollow mould (19) in the muffle ring (15).

8. The centrifugal casting apparatus according to one of claims 1 to 7,
**characterized in that**
for the production of the runner bush (16) a runner bush moulder is used which is constructed circularly symmetrically and/or at least conically in sections.

9. The centrifugal casting apparatus according to claim 8,
**characterized in that**
the runner bush moulder is made of a material which can be expelled.

## Revendications

1. Dispositif de coulée par centrifugation (22) pour la fabrication de pièces coulées, notamment de pièces de bijouterie, pièces de remplacement des dents ou demi-produits de remplacement des dents, comportant au moins un dispositif de retenue pour la fixation d'un moule creux perdu (13) comprenant au moins trois nids de moulage (14), le moule creux (13) pouvant être disposé dans le dispositif de retenue de manière à ce que les nids de moulage (14) tournent autour d'un axe (27) en cas de commande du dispositif de coulée par centrifugation (22),
**caractérisé en ce que**
les nids de moulage (14) présentent chacun au moins un canal d'alimentation (36) comportant chacun une ouverture d'écoulement (37) vers un bassin d'alimentation (16), la matière de coulée en fusion pouvant être versée dans le bassin d'alimentation (16), de sorte que les nids de moulage (14) peuvent être remplis de matière de coulée par les canaux d'alimentation (36), les ouvertures d'écoulement (37) des nids de moulage (14) se trouvant dans un plan et le bassin d'alimentation (16) ayant une conformation symétrique en rotation et se rétrécissant du bas vers le haut, notamment en forme conique, du moins par sections, et l'axe médian du bassin d'alimentation (16) s'étendant sensiblement le long de l'axe de rotation (18) du moule creux.

2. Dispositif de coulée par centrifugation selon la revendication 1,
**caractérisé en ce que**
la vitesse de rotation est réglable en fonction du moule creux utilisé (07, 08, 09, 13, 19) et/ou de la matière à couler.

3. Dispositif de coulée par centrifugation selon la revendication 2,
**caractérisé en ce que**
la vitesse de rotation est réglable automatiquement.

4. Dispositif de coulée par centrifugation selon une des revendications 1 à 3,
**caractérisé en ce que**
un nombre n de nids de moulage (14) utilisés est disposé sensiblement de manière régulière avec un décalage suivant un angle de rotation d'environ 360°/n.

5. Dispositif de coulée par centrifugation selon une des revendications 1 à 4,
**caractérisé en ce que**
les canaux d'alimentation (36), en partant des ouvertures d'écoulement (37) se trouvant dans un plan, s'étendent alternativement à l'oblique vers le haut et en bas radialement vers l'extérieur.

6. Dispositif de coulée par centrifugation selon une des revendications 1 à 5,
**caractérisé en ce que**
le diamètre extérieur du moule creux (13, 19) est constitué par une
bague de moufle (15) de forme circulaire.

7. Dispositif de coulée par centrifugation selon la revendication 6,
**caractérisé en ce que**,
dans la bague de moufle (15), on peut disposer des éléments d'insertion (20, 21) qui arrivent en contact en correspondance géométrique avec la circonférence intérieure de la bague de moufle (15) afin de réduire le volume disponible dans la bague de moufle (15) pour la fabrication du moule creux (19).

8. Dispositif de coulée par centrifugation selon une des revendications 1 à 7,
**caractérisé en ce que**,
pour fabriquer le bassin d'alimentation (16), on utilise un formateur de bassin d'alimentation qui a une conformation symétrique circulaire et/ou conique, du moins par sections.

9. Dispositif de coulée par centrifugation selon la revendication 8,
**caractérisé en ce que**
le formateur de bassin d'alimentation est fabriqué dans une matière éliminable.
